(19) Europäisches Patentamt
European Patent Office
Office européen des brevets

(11) Veröffentlichungsnummer: **0 427 079 A2**

# (12) EUROPÄISCHE PATENTANMELDUNG

(21) Anmeldenummer: **90120681.3**

(22) Anmeldetag: **29.10.90**

(51) Int. Cl.5: **B01D 71/52**, B01D 67/00, //C08G65/40

(30) Priorität: **07.11.89 DE 3936997**

(43) Veröffentlichungstag der Anmeldung: **15.05.91 Patentblatt 91/20**

(84) Benannte Vertragsstaaten: **AT BE CH DE DK ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Haubs, Michael, Dr.**
**Auf dem Weiher 18**
**W-6550 Bad Kreuznach(DE)**
Erfinder: **Drotloff, Hansotto, Dr.**
**Loreleystrasse 7**
**W-6230 Frankfurt/M 80(DE)**
Erfinder: **Wildhardt, Jürgen**
**Am Südhang 32**
**W-6274 Hünstetten-Wallrabenstein(DE)**

## (54) Halbdurchlässige Polyetherketon-Membran.

(57) Es wird eine semipermeable Membran aus Polyetherketonen beschrieben. Sie enthält ein Polymeres mit folgenden wiederkehrenden Einheiten:

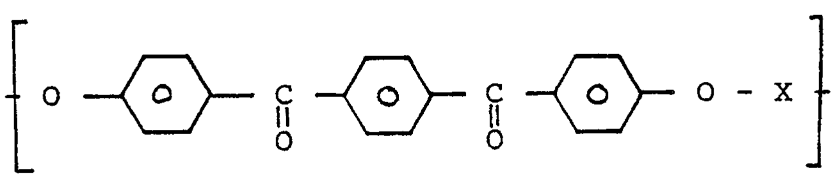

wobei X steht für:

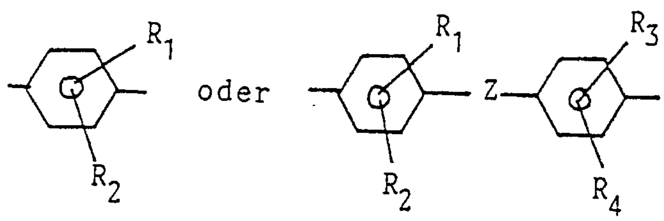

worin $R_1$, $R_2$ und $R_3$ und $R_4$ gleich oder verschieden sein können und H, Alkyl, Aryl, Oxyaryl, $NO_2$, CN, $NR_2$ oder Halogen bedeuten und
Z eine der Gruppierungen

EP 0 427 079 A2

$-O-$, $-S-$, $-CH_2-$, $-CF_2-$, 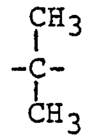 , 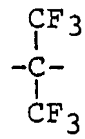 , $-SO_2-$, $-CO-$

bedeutet.

## SEMIPERMEABLE MEMBRAN AUS POLYETHERKETONEN

Die Erfindung betrifft eine semipermeable Membran aus Polyetherketonen sowie ein Verfahren zu ihrer Herstellung.

Seit der Einführung asymmetrischer Membranen aus Celluloseacetat durch Loeb und Sourirajan, (S. Sourirajan, Reverse Osmosis, Logos Press, London 1970) und aus hydrophoben Polymerisaten (US-A-3 615 024) sind zahlreiche Membranen, insbesondere für Separationen von in Wasser gelösten nieder- und makromolekularen Bestandteilen entwickelt und vorgeschlagen worden, deren Struktur und Eignung in der Literatur angegeben (Desalination, 35 (1980), 5-20) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Infolge ihres chemischen Aufbaus und ihrer baulichen Struktur können die einzelnen Membranen jeweils nur für ganz spezielle Separationsprobleme optimal geeignet sein. Hieraus resultiert die grundlegende Forderung, für neue Aufgabenstellungen stets neue Membranen zu entwickeln.

In der EP-A-0 082 433 wird eine übersichtliche Darstellung über die Vor- und Nachteile bereits bekannter Membranen gegeben. So gibt es beispielsweise hydrophile, asymmetrische Membranen aus Celluloseacetat mit befriedigenden antiadsorptiven Eigenschaften, die aber bezüglich ihrer thermischen und chemischen Beständigkeit sehr zu wünschen lassen. Membranen aus Polysulfonen oder ähnlichen Polymeren besitzen zwar eine gute thermische und chemische Beständigkeit, sind jedoch gegenüber der Einwirkung von organischen Lösemitteln empfindlich.

Hydrophilie und gleichzeitig Resistenz gegenüber Lösemitteln findet man bei Membranen aus Celluloseregenerat; diese sind aber in sauren oder alkalischen Medien relativ leicht hydrolysierbar, und darüber hinaus werden sie von Mikroorganismen leicht angegriffen.

Die DE-A-33 21 860 beschreibt chemisch beständige Membranen aus teilweise sulfoniertem Polyetherketon. Bei der Einwirkung von organischen Lösungsmitteln wie Aceton oder Tetrahydrofuran (THF) werden diese Membranen zwar nicht aufgelöst, sie quellen aber sehr stark auf und verändern dadurch irreversibel ihre Membraneigenschaften.

Der Erfindung liegt die Aufgabe zugrunde, semipermeable Membranen bereitzustellen, die gegen verseifende sowie gegen oxidative Agenzien und außerdem gegenüber thermischer Einwirkung beständig sind und die darüber hinaus in organischen Lösemitteln nicht ihre Eigenschaften verändern.

Gelöst wird diese Aufgabe durch eine Membran der eingangs genannten Gattung, deren kennzeichnendes Merkmal darin zu sehen ist, daß sie als Hauptbestandteil ein Polymeres mit folgenden wiederkehrenden Einheiten enthält:

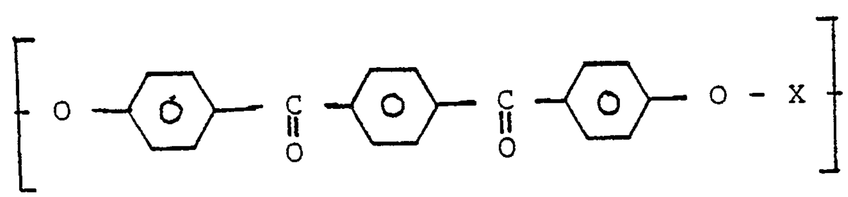

wobei X steht für:

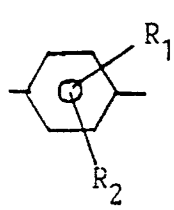 oder 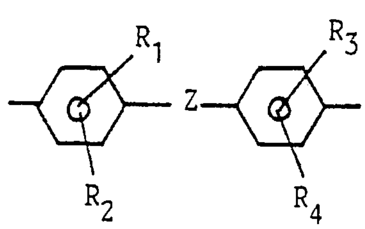

worin

$R_1$, $R_2$, $R_3$ und $R_4$ gleich oder verschieden sein können und H, Alkyl, Aryl, Oxyaryl, $NO_2$, CN, $NR_2$ oder Halogen bedeuten (Alkyl = $C_1$ - $C_4$) und

z eine der Gruppierungen

$$-O-,\ -S-,\ -CH_2-,\ -CF_2-,\ -\underset{CH_3}{\overset{CH_3}{\underset{|}{\overset{|}{C}}}}-,\ -\underset{CF_3}{\overset{CF_3}{\underset{|}{\overset{|}{C}}}}-,\ -SO_2-,\ -CO-$$

bedeutet.

Die Herstellung von Polyetherketonen z. B. durch nucleophile aromatische Polykondensation ist bekannt und in EP-A-0 001 879 und GB-A-1 414 421 beschrieben. Die Herstellung der vorstehend genannten Polyetherketone kann in bekannter Weise (DE-A-37 31 607) so vorgenommen werden, daß man 1,4-Bis(4-fluorbenzoyl)-benzol auf Alkalisalze von bifunktionellen Phenolen in dipolar aprotischen Lösungsmitteln einwirken läßt. In gleicher Weise können Copolymere hergestellt werden, indem man 1,4-Bis (4-fluorbenzoyl)benzol auf ein Gemisch aus Alkalisalzen von bifunktionellen Phenolen einwirken läßt. Nach dem stand der Technik können so statistische oder Block-Copolymere hergestellt werden.

Das Molekulargewicht der Polyetherketone, angegeben als Gewichtsmittel, liegt im allgemeinen im Bereich von 2 000 bis 500 000, vorzugsweise von 5 000 bis 100 000, insbesondere von 10 000 bis 60 000.

Die im vorstehenden beschriebenen Polyetherketone sind als solche nicht Gegenstand der vorliegenden Erfindung, sondern die Erfindung betrifft vielmehr eine semipermeable Membran enthaltend die genannten Polyetherketone als Hauptbestandteil.

Zur Herstellung der erfindungsgemäßen Membran aus Polyetherketon wird das Polymere zunächst gelöst, filtriert und entgast. Als Lösungsmittel eignen sich z. B. $H_2SO_4$, $CF_3$-$SO_3H$, HF, $Cl_2HC$-COOH und besonders eine Mischung von $Cl_2HC$-COOH und $H_2SO_4$ im Gewichtsverhältnis von etwa 4:1. Aus dieser Lösung wird in bekannter Weise nach dem Phaseninversionsverfahren (Robert E. Kesting, "Synthetic Polymeric Membranes", 2nd Ed., 1985, S. 237 ff.) eine semipermeable Membran hergestellt. Zu diesem Zweck wird die Polymerlösung auf eine möglichst plane Unterlage als flüssige Schicht ausgebreitet. Die plane Unterlage kann beispielsweise aus einer Glasplatte oder aus einer Metalltrommel bestehen.

Danach läßt man auf die flüssige Schicht Fällflüssigkeit einwirken, die mit dem Lösungsmittel der Lösung mischbar ist, in der aber die in der Polymerlösung gelösten Polymere unlöslich sind und als semipermeable Membran ausgefällt werden. Als Fällflüssigkeit wird beispielsweise Wasser verwendet.

Bei der Verfahrensdurchführung läßt man die Fällflüssigkeit vorteilhaft so lange auf die durch diese ausgefällte Membran einwirken, bis aus dieser praktisch das gesamte Lösungsmittel durch Fällflüssigkeit ersetzt ist. Danach wird die gebildete Membran von Fällflüssigkeit befreit, beispielsweise dadurch, daß man die Membran direkt in einem Luftstrom trocknet oder aber zunächst mit einem Weichmacher wie Glycerin behandelt und danach trocknet.

Zur Herstellung von Membranen, die auf einer Trägerschicht angeordnet sind, welche für strömungsfähige Medien durchlässig ist, geht man wie vorstehend angegeben vor, verwendet jedoch als Unterlage zur Ausbildung der Membranschicht als Träger für diese ein Vlies, z. B. aus Kunststoff, oder ein Papier und beläßt nach Ausbildung der Membranschicht diese auf der Unterlage. Die Membran kann aber auch zunächst trägerfrei hergestellt und erst danach auf einen durchlässigen Träger aufgebracht werden.

In bekannter Weise sind aus der Lösung der Polyetherketone auch Hohlfäden bzw. Kapillaren herstellbar, indem man die Polymerlösung nach dem Stande der Technik durch eine entsprechend ausgebildete formgebende Ringspalt-bzw. Hohlnadeldüse in Fällflüssigkeit einspinnt. Hierbei können nach dem Stand der Technik die Versuchsbedingungen so gewählt werden, daß sich eine Außen- oder Innenhaut oder beides bilden. Die Wandstärke derartiger Kapillaren oder Hohlfasern liegt üblicherweise im Bereich von 20 bis 500 µm.

Wird die Membran nach der Koagulation mit Glycerin getränkt, so kann sie vorzugsweise im Bereich von 5 bis 60 % Glycerin, bezogen auf ihr Gesamtgewicht, enthalten; die derart imprägnierte Membran wird getrocknet, z. B. bei einer Temperatur von 50 °C.

Die erfindungsgemäße Membran eignet sich ebenfalls als Trägermembran für permselektive Schichten, die direkt auf oder in der Membran erzeugt werden. So können beispielsweise dünne Schichten ( <1 µm) aus Polymeren mit funktionellen Gruppen (z. B. Silikone, Celluloseether, Fluorcopolymere) auf Wasser gespreitet werden, von dort auf die Membranoberfläche aufgebracht und z. B. durch Reaktion mit einem Diisocyanat fixiert werden, um somit höhere Permselektivitäten zu erzielen. Analog eignet sich die erfindungsgemäße Membran auch als Träger reaktiver Moleküle, beispielsweise um Enzyme oder Antikoagulantien wie Heparin nach dem Stande der Technik zu fixieren. Darüber hinaus eignet sich die Membran als Trä ger von permselektiven Schichten, die z. B. aus organischen Lösungsmitteln aufgetragen werden. Solche Composite-Membranen werden zur Gasseparation oder Pervaporation eingesetzt.

Die Dicke der erfindungsgemäßen Membran ohne Trägerschicht liegt im Bereich von 10 bis 300 µm,

insbesondere von 20 bis 120 µm.

Die Erfindung soll nachfolgend anhand von Ausführungsbeispielen noch eingehender dargestellt werden, ohne jedoch auf die dort angegebenen Ausführungsformen beschränkt zu sein.

Beispiel 1

150 g des Polyetherketons der folgenden Struktur

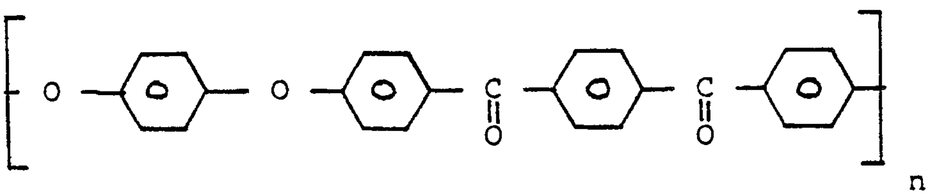

und einer intrinsischen Viskosität von 1.0 dl/g (gemessen in 96%iger $H_2SO_4$ bei 25 °C) werden in 850 g eines Gemisches aus Dichloressigsäure/$H_2SO_4$ 4:1 (w/w) bei ca. 30 °C unter Rühren gelöst. Nach ca. 10 h wird die Lösung filtriert und entgast.

Ein Teil dieser Lösung wird in $H_2O$ eingetragen, das ausgefällte Polymere gründlich mit $H_2O$ gewaschen und über Nacht im Vakuum bei 100 °C getrocknet. Die Analysendaten dieses gelösten und wieder ausgefällten Polymeren sind mit dem Ausgangspolymeren praktisch identisch, wie Tabelle 1 zeigt:

Tabelle 1

| | Tg/°C | Tm/°C | % Cl | % S |
|---|---|---|---|---|
| Ausgangspolymer | 160 | 365 | 0,03 | 0,03 |
| gelöstes und wieder ausgefälltes Polymer | 160 | 364 | 0,05 | 0,07 |
| Tg: Glastemperatur des Polymeren<br>Tm: Schmelzpunkt des Polymeren | | | | |
| % Cl, % S: Elementaranalytische Daten des Polymeren | | | | |

Beispiel 2

Gemäß Beispiel 1 werden Polymerlösungen hergestellt, filtriert und entgast.

Die resultierenden klaren Lösungen von verschiedenen Konzentrationen (genauere Angaben siehe Tabelle 2) wurden dann mit einer Gießvorrichtung gemäß US-A-4 229 291 auf ein Polypropylen-Trägervlies (erhältlich bei Fa. Freudenberg: FO 2430$^{(R)}$ 100 g/m$^2$) aufgebracht und in Wasser bei 14 °C koaguliert. Die Membranen sind dann mit einer wäßrigen Lösung von 40 Gew.-% Glycerin getränkt und bei 50 °C getrocknet worden. Die trockenen trägerverstärkten Membranen besaßen eine Dicke von 280 µm.

Die Membraneigenschaften der so hergestellten Membranen ind in der nachfolgenden Tabelle 2 angegeben.

- Die mechanische Permeabilität (Ultrafiltration) und das Rückhaltevermögen gegenüber gelösten Makromolekülen wurden bei Drucken von 3,0 bar bei 20 °C in einer gerührten zylindrischen Zelle bestimmt (700 U/min, 350 ml, Membranfläche 43 cm$^2$).

Das Rückhaltevermögen ist definitionsgemäß

$$R = \frac{C_1 - C_2}{C_1} \cdot 100 \quad \%$$

$C_1$ ist die Konzentration der wäßrigen Testlösung,
$C_2$ ist die Konzentration im Permeat.

Als Testlösung wurde eine 2%ige wäßrige Polyvinylpyrrolidonlösung (PVP) eingesetzt, erhältlich unter dem Namen "Kollidon K30"® der Firma BASF, die Molmasse des Polyzinylpyrrolidons betrug 49 000 Dalton.

Die Konzentrationsmessungen erfolgten in einem digitalen Dichtemeßgerät "DMA 60 + 601"(R) der Firma Heraeus.

Tabelle 2

| Membran Nr. | Polymerkonzentr. | $H_2O$-Fluß | Rückhaltevermögen (K30) | Lösungsmittelzusammensetzung |
|---|---|---|---|---|
| | g/100 g | 3 bar | 2 % | ($H_2SO_4/Cl_2HC$-COOH(w/w) |
| 1 | 10 | 620 | 65% | 20/80 |
| 2 | 12 | 480 | 70% | 20/80 |
| 3 | 14 | 340 | 87% | 25/75 |
| 4 | 16 | 180 | 91% | 25/75 |
| 5 | 12 | 160 | 95% | 100/0 |

Beispiel 3

Die Membrane Nr. 2 aus Beispiel 2 wurde nach einer Wässerungszeit von 24 h an der Luft trocknen gelassen und als Träger für einen Silikonkautschukfilm verwendet. Dazu wurde die trockene Trägermembrane mit ca. 80 µm einer 2%igen Silikonlösung (9 Gew.-Teile VP 7660A + 1 Gew.-Teil VP 7660B) der Fa. Wacker in Hexan beschichtet, das Lösungsmittel verdunsten lassen und die erhaltene Compositemembrane für 16 h im Trockenschrank auf ca. 70 °C erwärmt. Anschließend wurden die Gasflüsse für verschiedene Gase gemessen. Folgende Werte wurden erhalten:

| Gas | $N_2$ | $0_2$ | $CO_2$ | He |
|---|---|---|---|---|
| Permeabilität in $cm^3$ (STP)/$cm^2$•sec•bar x 100 | 1,3 | 2,9 | 15 | 1,8 |

Beispiel 4

Die Membrane Nr. 3 aus Beispiel 2 (Tabelle Nr. 2) wurde nach einer Wässerungszeit von 24 h für einige Stunden in Aceton eingelegt, so daß das Porenwasser praktisch vollständig durch Aceton ersetzt war. Danach wurde die Membrane wieder für einige Stunden in $H_2O$ gelegt. Die Daten aus Tabelle 3 belegen, daß die Einwirkung des organischen Lösungsmittels die Membrane in ihren Eigenschaften nicht verändert hat:

| | $H_2O$-Flub | Rückhalt PVP K30 |
|---|---|---|
| | 3 bar | 2 % |
| Membrane vor Behandlung mit Aceton | 340 | 87% |
| Membrane nach Behandlung mit Aceton | 320 | 88% |

Beispiel 5

50 g des Polyetherketons der folgenden Struktur

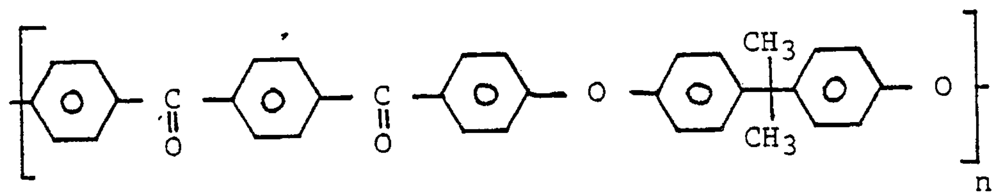

und einer intrinsischen Viskosität von 0,6 dl/g werden in 280 g $Cl_2HC$-COOH bei 25 °C gelöst, filtriert und entgast. Gemäß Beispiel 2 wird eine Membrane aus dieser 15%igen Lösung bei 14 °C hergestellt. Die Membrane hatte folgende Eigenschaften:
$H_2O$-Fluß bei 3 bar: 128 l/m$^2$h
Rückhaltevermögen für 2 % PVP K30: 97 %

## Ansprüche

1. Semipermeable Membran aus Polyetherketonen, dadurch gekennzeichnet, daß sie ein Polymeres mit folgenden wiederkehrenden Einheiten enthält:

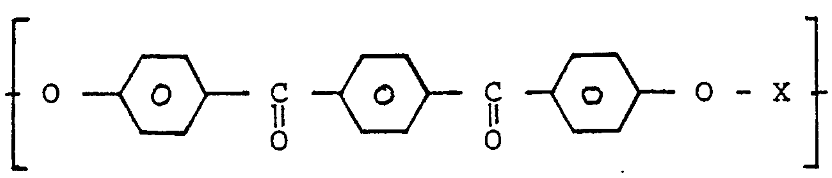

wobei X steht für:

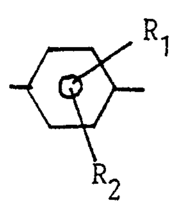

oder

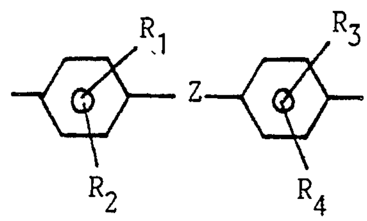

worin
$R_1$, $R_2$, $R_3$ und $R_4$ gleich oder verschieden sein können und H, Alkyl, Aryl, Oxyaryl, $NO_2$, CN, $NR_2$ oder Halogen bedeuten und
Z eine der Gruppierungen

$-O-$, $-S-$, $-CH_2-$, $-CF_2-$, 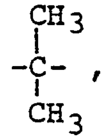 , 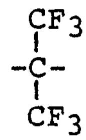 , $-SO_2-$, $-CO-$

bedeutet.

2. Membran nach Anspruch 1, dadurch gekennzeichent, daß $R_1$ und $R_2$ gleich sind und Wasserstoff bedeuten.

3. Membran nach Anspruch 1 oder 2, dadurch gekennzeichnet, daß Z eine Methylengruppe oder eine 2,2'-Propylengruppe bedeutet.

4. Membran nach einem der Ansprüche 1 bis 3, dadurch gekennzeichent, daß das Molekulargewicht der Polyetherketone, angegeben als Gewichtsmittel, im Bereich von 2 000 bis 500 000 liegt, vorzugsweise von 5 000 bis 100 000, insbesondere von 10 000 bis 60 000.

5. Verfahren zur Herstellung einer Membran nach einem der Ansprüche 1 bis 4, bei dem die Polymeren zunächst in einem Lösemittel gelöst, filtriert und entgast werden und dann nach dem Phaseninversionsverfahren eine Membran hergestellt wird, dadurch gekennzeichnet, daß als Lösemittel $H_2SO_4$, $CF_3$-$SO_3H$, HF, $CL_2HC$-COOH oder eine Mischung von $Cl_2HC$-COOH und $H_2SO_4$ eingesetzt wird.

6. Verfahren nach Anspruch 5, dadurch gekennzeichnet, daß als Lösemittel $H_2SO_4$ oder eine Mischung von $Cl_2HC$-COOH und $H_2SO_4$ im Gewichtsverhältnis von etwa 4:1 eingesetzt wird.

7. Verfahren nach Anspruch 5 oder 6, dadurch gekennzeichnet, daß als Fällmittel bei dem Phaseninversionsverfahren Wasser eingesetzt wird.

8. Verwendung einer Membran nach einem der Ansprüche 1 bis 4, hergestellt nach einem Verfahren nach einem der Ansprüche 5 bis 7, zur Ultrafiltration.

9. Verwendung einer Membran nach einem der Ansprüche 1 bis 4, hergestellt nach einem Verfahren nach einem der Ansprüche 5 bis 7, als Trägermembran für Gasseparations-oder Pervaporationsmembranen.